# EUROPÄISCHE PATENTSCHRIFT

(11) **EP 0 484 710 B1**
(45) Veröffentlichungstag und Bekanntmachung des Hinweises auf die Patenterteilung: **22.02.1995**
(21) Anmeldenummer: 91117716.0
(22) Anmeldetag: 17.10.1991
(51) Int. Cl.: B01D 35/30, B01D 35/14

(54) **Flüssigkeitsfilter**
Liquid filter
Filtre à liquides

(30) Priorität: 06.11.1990 DE 4035181
(43) Veröffentlichungstag der Anmeldung: 13.05.1992
(73) Patentinhaber: ROBERT BOSCH GMBH, 70442 Stuttgart (DE)
(72) Erfinder: Straubel, Max, Dr.-Ing., W-7000 Stuttgart 61 (DE)

(56) Entgegenhaltungen:
- EP-A- 0 270 303
- EP-A- 0 346 692
- WO-A-88/03432
- FR-A- 2 544 021
- US-A- 4 763 620

## Beschreibung

### Stand der Technik

Die Erfindung geht aus von einem Flüssigkeitsfilter, insbesondere zur Reinigung von Kraftstoffen aus Fahrzeugen, nach der im Oberbegriff des Anspruchs 1 näher angegebenen Gattung.

Es ist schon ein solches Flüssigkeitsfilter zum Reinigen von Dieselkraftstoffen auf Fahrzeugen aus der DE-OS 33 12 613 bekannt, das mit einem Wasserspeicherraum und einer Ablaßschraube ausgerüstet ist. Solche Dieselfilter werden bevorzugt unter der Motorhaube eines Fahrzeuges angeordnet und müssen deshalb beim Aufprall von Fahrzeugen besondere Sicherheitsbedingungen erfüllen. Insbesondere muß unter verschärften Crash-Bedingungen das Flüssigkeitsfilter auch bei mechanisch starker Verformung noch dicht sein. Zu diesem Zweck ist ein becherförmiges Gehäuseteil dieses. Flüssigkeitsfilters aus tiefgezogenem Stahlblech hergestellt und an seinem Rand mit einem Edelstahl-Deckel verschweißt. Im Deckel sind Rohr-Anschlüsse für Zulauf und Ablauf als Schlauchanschlußstutzen ausgebildet und im Deckel fest eingelötet. Auf diese Weise kann das Flüssigkeitsfilter hohe Sicherheitsanforderungen gerade bei Crash-Bedingungen erfüllen, ist widerstandsfähig gegen verschiedene Kraftstoffarten und Wasser, erlaubt ein leichtes Handling und weist zudem ein gutes Aussehen auf.

Nachteilig ist jedoch, daß eine derartige Crash-Sicherheit nur mit relativ hohem Aufwand und damit entsprechend teuer erreichbar ist. Auch lassen sich damit die verschiedenartigen, von Kunden vorgegebenen Bedingungen zur Crash-Sicherheit nicht immer ausreichend erfüllen.

Ferner ist aus der WO 88/03432 ein Flüssigkeitsfilter bekannt, bei dem ein austauschbarer Filtereinsatz in einem doppelwandigen Gehäuse angeordnet ist. Ein aus Kunststoff bestehendes, den Filtereinsatz aufnehmendes Innengehäuse ist dabei von einem metallischen Außengehäuse umgeben, wobei zwischen beiden ein Auffangraum mit einer Leckanzeige ausgebildet ist. Das Flüssigkeitsfilter ist zum Reinigen gefährlicher Flüssigkeiten vorgesehen, wobei beim Wechseln des Einsatzes der Auffangraum ein ungewolltes Austreten dieser Flüssigkeit verhindern soll. Das Gehäuse mit seinem relativ dicken, stabilen Kunststoff- und Metallwänden baut teuer und ist auch von seiner Bauweise her kaum für Crash-Bedingungen geeignet.

Weiterhin ist aus der EP 0 270 303 A2 ein Filtergehäuse bekannt, bei dem ein inneres Gehäuse aus Kunststoff von einem äußeren Gehäuse aus Metall umgeben ist. Beide im wesentlichen zylindrischen Gehäuse sind an mindestens einem Ende konisch und im Abstand voneinander ausgebildet, so daß das gegen aggressive Fluide widerstandsfähige Kunststoff-Gehäuse sich bei hohen Drücken oder Temperaturen ausdehnen kann, bevor es sich am metallischen Gehäuse anlegt. Das Filtergehäuse ist nicht zum Einsatz unter Crash-Bedingungen geeignet.

### Vorteile der Erfindung

Das erfindungsgemäße Flüssigkeitsfilter mit den kennzeichnenden Merkmalen des Anspruchs 1 hat demgegenüber den Vorteil, daß es eine crash-sichere Filterbauweise erlaubt, mit der verschiedenartige, von den Kunden vorgegebene Bedingungen relativ einfach und kostengünstig erfüllbar sind. Das Flüssigkeitsfilter ermöglicht somit eine Bauart, die den verschiedensten, heute üblichen Crash-Methoden standhalten dürfte. Ferner kann auf diese Weise das Filter selbst nach Kostengesichtspunkten optimiert werden. Insbesondere können mit dieser Methode die billigsten Kunststoffilter crash-sicher gemacht werden.

Durch die in den Unteransprüchen aufgeführten Maßnahmen sind vorteilhafte Weiterbildungen und Verbesserungen des im Hauptanspruch angegebenen Flüssgkeitsfilters möglich. Besonders vorteilhaft ist eine Ausbildung nach Anspruch 2 oder 3, wodurch relativ einfache und kostengünstige Lösungen möglich sind. Weitere zweckmäßige Ausgestaltungen ergeben sich aus den übrigen Ansprüchen.

### Zeichnung

Vier Ausführungsbeispiele der Erfindung sind in der Zeichnung dargestellt und in der nachfolgenden Beschreibung näher erläutert. Es zeigen Figur 1 einen Längsschnitt durch eine erste Ausführungsform des Flüssigkeitsfilters in stark vereinfachter Darstellung, die Figuren 2 und 3 jeweils einen Teilschnitt einer zweiten bzw. dritten Ausführungsform des Flüssigkeitsfilters und Figur 4 einen Längsschnitt durch ein viertes Ausführungsbeispiel in vereinfachter Darstellung.

### Beschreibung der Ausführungsbeispiele

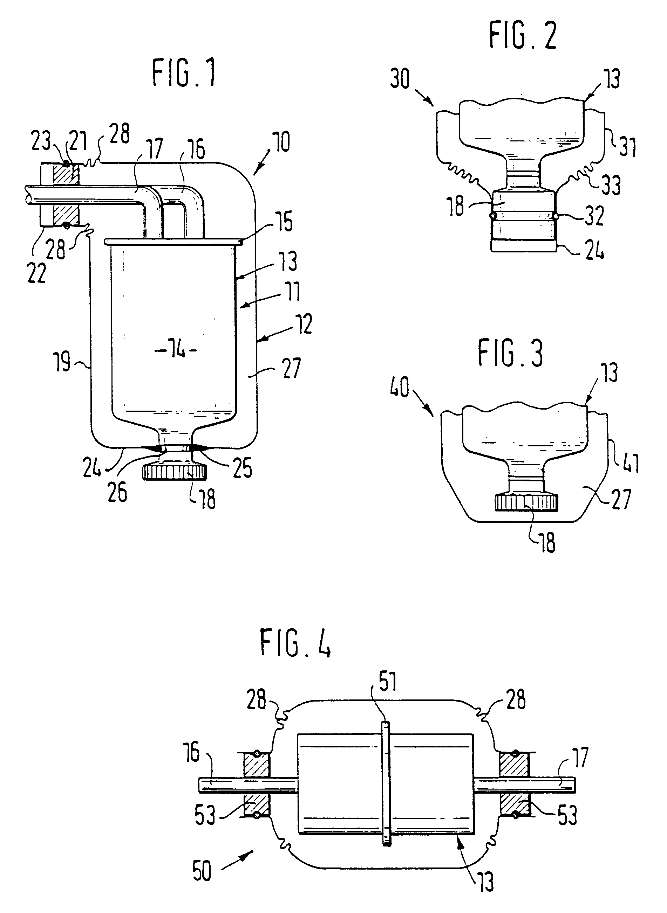

Die Figur 1 zeigt einen Längsschnitt durch ein erstes Flüssigkeitsfilter 10, das im wesentlichen aus dem eigentlichen Filter 11 und einer dieses Filter umgebenden Schutzhülle 12 besteht.

Bei dem Filter 11 handelt es sich um ein übliches Kraftstoffilter, wie es zum Reinigen von Dieselkraftstoff auf Fahrzeugen verwendet wird. Das Filter 11 hat ein Gehäuse 13, bestehend aus einem becherförmigen Gehäuseteil 14 und einem damit dicht und fest verbundenen Deckel 15, in dem zwei abgewinkelt verlaufende Anschlußstutzen 16, 17 für Zulauf bzw. Ablauf befestigt sind. Das Gehäuse 13 weist in seinem Inneren in nicht näher gezeichneter Weise ein zwischen die beiden Anschlußstutzen 16, 17 geschaltetes Filterelement beliebiger Bauart auf, sowie einen unten liegenden Wasserspeicherraum, der über eine bodenseitig gelegene Ablaßschraube 18 entleerbar ist.

Das Filter 11 ist von einer Schutzhülle 12 umgeben, wozu es als Ganzes in einen reißfesten und flexiblen Plastikbeutel 19 gesteckt ist. Dieser im wesentlichen schlauchartig ausgebildete Plastikbeutel 19 ist so groß gewählt, daß er das Filter 11 lose umschließt. Dabei sind die Anschlußstutzen 16, 17 durch ein Verbindungsstück 21 nach außen geführt, an dessem äußeren, runden Umfang ein oberer Rand 22 des Plastikbeutels 19 mit Hilfe eines Halteringes 23 dicht und fest abgebunden wird. An seinem unteren Ende 24 weist der Plastikbeutel 19 im Bereich einer wulstartigen Verdickung 25 eine nicht näher dargestellte Öffnung 26 auf, durch welche die Ablaßschraube nach außen ragt. Im Bereich der Ablaßschraube 18 wird somit zugleich der Plastikbeutel 19 in seinem Bodenbereich abgedichtet und befestigt.

Der Plastikbeutel 19 umschließt auf diese Weise einen nach außen allseits abgedichteten Auffangraum 27, innerhalb dessen das Filter 11 sich befindet. Zur Überwindung von unterschiedlichen Durchmessern und von Richtungsänderungen innerhalb des schlauchförmigen Plastikbeutels 19 können ferner gewellte bzw. gefaltete Übergangszonen 28 vorgesehen werden.

Wird das Flüssigkeitsfilter 10 starken mechanischen Verformungen unterworfen, wie dies bei einem Zusammenprall von Fahrzeugen oder bei einem Crash-Test der Fall ist, so können am Filtergehäuse 13 oder an den Anschlußstutzen 16, 17 Undichtheiten auftreten, aus denen Kraftstoff austritt. Der verformbare und bei Crash-Bedingungen unverletzt bleibende Plastikbeutel 19 fängt den austretenden Kraftstoff in dem nach außen abgedichteten Auffangraum 27 auf. Wenn der Plastikbeutel 19 aus durchsichtigem bzw. durchscheinendem Material besteht, kann eine Bedienungsperson beim Crash-Test von außen erkennen, ob sich Flüssigkeit in dem Auffangraum 27 gesammelt hat. Der Plastikbeutel 19 kann aus hoch-reißfestem Material relativ preiswert hergestellt werden, so daß das Flüssigkeitsfilter 10 den verschiedensten Crash-Methoden standhalten dürfte. Zudem ermöglicht es die Schutzhülle 12, daß das Filter 11 selbst nach Kostengesichtspunkten optimiert werden kann, so daß mit vorliegender Bauweise auch billigste Kunststoffilter crash-sicher gemacht werden können.

Die Figur 2 zeigt ein zweites Flüssigkeitsfilter 30, das sich vom ersten Flüssigkeitsfilter 10 nach Figur 1 wie folgt unterscheidet, wobei für gleiche Bauelemente gleiche Bezugszeichen verwendet werden: Beim Flüssigkeitsfilter 30 ist die Ablaßschraube 18 innerhalb eines schlauchförmigen Plastikbeutels 31 angeordnet, der mit seinem unteren Rand 24 mit Hilfe eines Halteringes 32 am runden Außenumfang der Ablaßschraube 18 dicht und fest abgebunden ist. Um den Querschnittsübergang vom größeren Durchmesser des Filtergehäuses 13 zum kleineren Durchmesser der Ablaßschraube 18 zu erleichtern, kann der schlauchartige Plastikbeutel 31 wiederum eine gewellte Übergangszone 33 aufweisen.

Die Figur 3 zeigt einen teilweisen Längsschnitt durch einen dritten Flüssigkeitsfilter 40 in vereinfachter Darstellung, bei welchem der Plastikbeutel 41 sackartig ausgebildet und damit unten geschlossen ist. Die Ablaßschraube 18 liegt dabei innerhalb des Auffangraumes 27, so daß beim Ablassen von Wasser aus dem Filter 11 zuvor der Plastikbeutel 41 entfernt werden muß.

Die Figur 4 zeigt einen Längsschnitt durch ein viertes Flüssigkeitsfilter 50 in vereinfachter Darstellung, bei dessen Filter 51 die Anschlußstutzen 16, 17 für Zulauf und Ablauf an entgegengesetzten Stirnseiten des Gehäuses 13 ausgebildet sind. Die Schutzhülle ist hier als schlauchförmiger Plastikbeutel 52 ausgebildet, der mit seinen Enden an runden Verbindungsstücken 53 dicht und fest abgebunden ist. Durch die symmetrische Bauweise des Filters 51 kann der Plastikbeutel 52 nahe seiner beiden Abbindestellen zwei gewellte Übergangszonen 28 aufweisen.

Selbstverständlich sind an den gezeigten Ausführungsformen Änderungen möglich, ohne vom Gedanken der Erfindung abzuweichen. Wenn die Flüssigkeitsfilter nach Figur 1 bis Figur 3 mit Hilfe einer Befestigungsschelle zum Beispiel im Motorraum eines Fahrzeugs befestigt werden, so kann der schlauch- bzw. der sackförmige Plastikbeutel in nicht näher gezeichneter Weise in der Mitte nochmals gefangen werden. Anstelle der gewellten Übergangszonen kann der Plastikbeutel auch einfach in Falten gelegt werden.

## Patentansprüche

1. Flüssigkeitsfilter, insbesondere zur Reinigung von Kraftstoffen auf Fahrzeugen, mit einem einen Filtereinsatz aufnehmenden Gehäuse, an dem wenigstens zwei Anschlüsse für Zulauf und Ablauf angeordnet sind, dadurch gekennzeichnet, daß das .Flüssigkeitsfilter (10, 30, 40, 50) von einer Schutzhülle (12) umgeben ist, die aus einem beutelartigen, reißfesten und flexiblen Plastikmaterial besteht und die einen nach außen abgedichteten Auffangraum (27) einschließt, der die bei Crash-Bedingungen aus dem Filter (11) austretende Flüssigkeit auffangen kann.

2. Flüssigkeitsfilter nach Anspruch 1, dadurch gekennzeichnet, daß die Schutzhülle (12) das Filter (11) lose umgibt und an mindestens einer Stelle (21, 23) dicht und fest mit dem Filter (11) verbunden ist.

3. Flüssigkeitsfilter nach einem der Ansprüche 1 oder 2, dadurch gekennzeichnet, daß die Schutzhülle (12) schlauchartig ausgebildet und an zwei Stellen (21, 25; 21, 32; 53) dicht und fest mit dem Flüssigkeitsfilter (11, 13) verbunden ist.

4. Flüssigkeitsfilter nach einem der Ansprüche 1 oder 2, dadurch gekennzeichnet, daß die Schutzhülle (12) sackartig ausgebildet und an einer einzigen Stelle (21, 23) dicht und fest am Filter (11) abgebunden ist (Fig. 3).

5. Flüssigkeitsfilter nach einem oder mehreren der Ansprüche 1 bis 4, dadurch gekennzeichnet, daß die beiden Anschlüsse (16, 17) ein insbesondere gemeinsames Verbindungsstück (21) durchdringen, an dem die Schutzhülle (12) dicht befestigt ist, insbesondere an dessen runden Außenumfang.

6. Flüssigkeitsfilter nach einem der Ansprüche 1 bis 5, dadurch gekennzeichnet, daß die Schutzhülle (12) in einem bodenförmigen Abschnitt (24) eine Öffnung (26) aufweist, durch welche eine Ablaßschraube (18) von außen nach innen in das Gehäuse (13) ragt, wobei die Ablaßschraube (18) zugleich eine Dichtstelle für die Schutzhülle (12) bildet (Fig. 1).

7. Flüssigkeitsfilter nach einem der Ansprüche 1 bis 3, dadurch gekenzeichnet, daß die Schutzhülle (12) mit ihrem unteren schlauchförmigen Ende (24) an der Ablaßschraube (18) dicht und fest befestigt ist, insbesondere an deren Außenumfang (Fig. 2).

8. Flüssigkeitsfilter nach einem der Ansprüche 1 bis 7, dadurch gekennzeichnet, daß die Schutzhülle (12) nahe einer Abbindestelle (23, 32) eine insbesondere gewellte Übergangszone (28, 33) zwischen unterschiedlich großen Querschnittszonen des Plastikbeutels (19, 31) aufweist.

9. Flüssigkeitsfilter nach einem der Ansprüche 1 bis 3 und 8, mit einem Filter (51), dessen Anschlußstutzen an entgegengesetzten Stirnseiten des Filtergehäuses liegen, dadurch gekennzeichnet, daß der schlauchartige Plastikbeutel (52) über gleichartige Verbindungsstücke (52) an jedem Anschlußstutzen (16, 17) abgebunden ist (Fig. 4).

## Claims

1. Liquid filter, in particular for the cleaning of fuels on vehicles, having a housing which receives a filter insert and on which there are disposed at least two connections for inflow and outflow, characterized in that the liquid filter (10, 30, 40, 50) is surrounded by a protective sheath (12), which consists of a bag-like, tear-resistant and flexible plastic material and encloses an outwardly sealed collecting space (27) which, under crash conditions, is able to collect liquid issuing from the filter (11).

2. Liquid filter according to Claim 1, characterized in that the protective sheath (12) loosely surrounds the filter (11) and, at at least one point (21, 23), is connected to the filter (11) in a seal-tight and firm manner.

3. Liquid filter according to one of Claims 1 or 2, characterized in that the protective sheath (12) is configured in the style of a hose and, at two points (21, 25; 21, 32; 53), is connected to the liquid filter (11, 13) in a seal-tight and firm manner.

4. Liquid filter according to one of Claims 1 or 2, characterized in that the protective sheath (12) is configured in the style of a sack and, at a single point (21, 23), is bound to the filter (11) in a seal-tight and firm manner (Fig. 3).

5. Liquid filter according to one or more of Claims 1 to 4, characterized in that the two connections (16, 17) penetrate an, in particular, common joining piece (21) to which the protective sheath (12) is fastened in a seal-tight manner, in particular to the round outer periphery of the said joining piece.

6. Liquid filter according to one of Claims 1 to 5, characterized in that the protective sheath (12) exhibits, in a base-shaped section (24), an opening (26) through which a drain screw (18) juts from the outside inwards into the housing (13), the drain screw (18) at the same time forming a sealing point for the protective sheath (12) (Fig. 1).

7. Liquid filter according to one of Claims 1 to 3, characterized in that the protective sheath (12) is fastened by its lower, hose-shaped end (24) to the drain screw (18) in a seal-tight and firm manner, in particular to the outer periphery of the said drain screw (Fig. 2).

8. Liquid filter according to one of Claims 1 to 7, characterized in that the protective sheath (12) exhibits, close to a binding point (23, 32), an, in particular, wavy transition zone (28, 33) between differently sized cross-sectional zones of the plastic bag (19, 31).

9. Liquid filter according to one of Claims 1 to 3 and 8, having a filter (51), the connecting sockets of which are situated at opposite end faces of the filter housing, characterized in that the hose-like plastic bag (52) is bound via homogeneous connecting pieces (52) to each connecting socket (16, 17).

## Revendications

1. Filtre à liquides, destiné notamment à épurer des carburants dans des véhicules automobiles, comportant un boîtier qui reçoit un élément filtrant équipé de deux raccords d'entrée et de sortie, caractérisé en ce que le filtre (10, 30, 40, 50) est entouré par une enveloppe de protection (12) faite d'un matériau plastique résistant à la déchirure, flexible et présenté sous la forme d'une poche délimitant de manière étanche vis-à-vis de l'extérieur, un volume de réception (27) pouvant recueillir le liquide sortant du filtre (11), dans les conditions de crash.

2. Filtre selon la revendication 1, caractérisé en ce que l'enveloppe de protection (12) entoure le filtre (11) à une certaine distance et est reliée à ce filtre, en un endroit au moins (21, 23), solidement et avec étanchéité.

3. Filtre selon une des revendications 1 ou 2, caractérisé en ce que l'enveloppe de protection (12) a la forme d'une manche reliée au filtre (11, 13) en deux endroits (21, 25 ; 21, 32, 53), solidement et avec étanchéité.

4. Filtre selon une des revendications 1 ou 2, caractérisé en ce que l'enveloppe de protection (12) a la forme d'un sac relié à un seul endroit (21, 23) au filtre (11), solidement et avec étanchéité (fig.3)

5. Filtre selon une des revendications précédentes, caractérisé en ce que les deux raccords (16,17) traversent une pièce commune de liaison (21) sur laquelle est fixée l'enveloppe de protection (12) de manière étanche en particulier sur la surface externe du corps rond de cette pièce.

6. Filtre selon une des revendications 1 à 5, caractérisé en ce que l'enveloppe de protection (12) dans une partie formant un fond (24) présente une ouverture (26) à travers laquelle de l'extérieur vers l'intérieur, une vis de purge (18) pénètre dans le boîtier (13). Cette vis constituant également un endroit où est assurée l'étanchéité de l'enveloppe (figure 1).

7. Filtre selon une des revendications 1 à 3, caractérisé en ce que l'enveloppe de protection (12) est fixée solidement et avec étanchéité, par son extrémité inférieure en forme de manche (24) sur la vis de purge (18) en particulier sur la surface externe de celle-ci. (figure 2).

8. Filtre selon une des revendications 1 à 7, caractérisé en ce que l'enveloppe de protection (12) comporte près d'une liaison (23, 32) une zone de transition (28, 33) présentant en particulier des ondulations, entre des zones transversales de la poche (19, 31) de grandeurs différentes.

9. Filtre selon une des revendications 1 à 3 et 8, comportant un filtre (51) proprement dit, dont les tubulures de raccordement sont montées sur des faces frontales opposées du boîtier du filtre, caractérisé en ce que la poche de plastique (52) en forme de manche est reliée par des pièces de liaison (53) à chacune des tubulures de raccordement (16, 17) (fig.4).
